# EUROPEAN PATENT APPLICATION

(11) **EP 2 482 207 A2**
(43) Date of publication of application: **01.08.2012**
(21) Application number: 12153519.9
(22) Date of filing: 01.02.2012
(51) Int. Cl.: G06F 17/30

(54) **Searchable catalog for externally defined graphic element (edge) definitions**

(30) Priority: 01.02.2011 US 201113019154
(71) Applicant: Rockwell Automation Technologies, Inc., Mayfield Heights, OH 44124 (US)
(72) Inventor: Smith, Kevin C., Franklin, WI 53132 (US); Kowal, Steven John, Milwaukee, WI 53207 (US); Lubimov, Aleksey Y., St. Francis, WI 53235 (US); Thomas, David E., Germantown, WI 53022 (US)
(74) Representative: Grünecker, Kinkeldey, Stockmair & Schwanhäusser

(57) **Abstract**

A catalog for storing externally defined graphic element (EDGE) definitions allows graphics developers and system designers to share customized and application-specific operator interface graphics. The catalog includes publishing functionality that allows a user to submit new graphic element definitions to the catalog together with instructions regarding how the graphic element definition is to be classified within a browsable hierarchy of industry-specific categories. Search and retrieval functionality allows an HMI developer to search for desired graphic element definitions using keyword-based searching or by browsing the classification hierarchy. Advanced search functions can generate or refine search criteria based on characterizing information polled from one or more of an operator interface application, an industrial control program, or networked field devices. The catalog can reside at a central network-accessible location or locally on a developer workstation to facilitate access to the stored graphic element definitions.

## Description

### TECHNICAL FIELD

The subject application relates generally to automation control and visualization, and, more particularly, to sharing of externally defined graphic element (EDGE) definitions using a searchable catalog.

### BACKGROUND

Industrial controllers and their associated control programming are at the heart of modern industrial automation systems. These controllers interact with field devices on the plant floor to carry out controlled processes relating to such objectives as manufacture of a product, material handling, batch processing, waste water treatment, and other such processes. The controllers typically exchange data with the field devices using native hardwired I/O or *via* a plant network such as Ethernet, Data Highway Plus, Devicenet, or the like. The controller receives any combination of digital or analog signals from the field devices indicating a current state of the devices and their associated processes (*e.g*., temperature, position, part presence or absence, fluid level, *etc.*), and executes a control program that performs automated decision-making for the controlled processes based on the received signals. The controller then outputs appropriate digital and/or analog control signaling to the field devices in accordance with the decisions made by the control program. These outputs can include device actuation signals, temperature or position control signals, operational commands to a machining or material handling robot, and the like. The control program can comprise any conceivable type of code used to process input signals read into the controller and to control output signals generated by the controller, including but not limited to ladder logic, sequential function charts, function block diagrams, structured text, or other such platforms.

To facilitate operator interaction with the industrial controllers, industrial control systems often include at least one human-machine interface (HMI) that reads control data from the controller and renders the control data on one or more display screens. The HMI developer can choose to visualize this control data as a numeric value, a graphical animation (*e.g*., color animation, position animation, visibility animation, *etc*.), or another suitable display format. The HMI also serves as an interface through which an operator can issue commands (*e.g*., machine start commands) or write values (*e.g*., setpoint values) to the controller's program to control or alter the process being automated.

A typical HMI application comprises one or more display interface screens having a number of graphic elements, such as animated device or equipment graphics, numerical display objects, graphical meters, interactive faceplates, and other such display objects. The graphic elements available to an HMI developer are typically limited to those provided in a graphics library bundled with the HMI development software. These pre-packaged graphic elements are necessarily general, multi-purpose elements suitable for a wide range of automation applications. However, the utility of an HMI application can often be improved by inclusion of more customized graphic elements tailored to an end user's particular industry or control application. For example, a graphic element representing a valve used in a waste water treatment application may require different properties or animation characteristics than a valve used in a hydraulic power system. Although end users may submit requests to the HMI software vendor for modified or customized graphic elements, such requested graphic elements typically do not become available until a subsequent revision of the HMI software is released to market, since development of graphic elements is coupled to the development of the HMI software product itself. This can cause an unacceptable time lag between an HMI developer's immediate need for a suitable graphic element during development of a given application and the availability of such an element.

The above-described deficiencies of today's automation control and visualization systems are merely intended to provide an overview of some of the problems of conventional systems, and are not intended to be exhaustive. Other problems with conventional systems and corresponding benefits of the various nonlimiting embodiments described herein may become further apparent upon review of the following description.

### SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

One or more embodiments of the present disclosure provide a searchable catalog of externally defined graphical element (EDGE) definitions. The EDGE catalog can act as a common repository for EDGE definition designers, who can use the catalog to publish new, modified, or extended EDGE definitions for access by HMI application designers. EDGE definition designers can also publish documentation and samples that provide supplemental information about the applicability and use of their published EDGE definitions. The EDGE catalog can organize the EDGE definitions according to a domain-specific hierarchy that allows an HMI developer to browse for a required EDGE definition by industry, application type, element type, *etc.*

By allowing external EDGE definition developers to publish their customized graphical element definitions to a shared catalog, one or more embodiments of the present innovation can effectively decouple the development of EDGE definitions from the development of an HMI software product, providing HMI developers a wider and more application-specific selection of EDGE definitions during development of their applications. The EDGE definition catalog also allows HMI designers to leverage the experience and expertise of other designers by facilitating reusability of externally defined graphical elements, thereby mitigating duplicated design efforts to meet a particular control or visualization need.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 depicts an overview of an exemplary control system.

FIG. 2 depicts a general overview of an EDGE definition catalog.

FIG. 3 is a block diagram of an exemplary EDGE definition catalog.

FIG. 4 illustrates the interactions between an EDGE developer workstation and the EDGE definition catalog to facilitate publication of a new or modified EDGE definition.

FIG. 5 illustrates an exemplary EDGE definition submission.

FIG. 6 illustrates an example hierarchy of industry-specific categories.

FIG. 7 illustrates the interactions between an HMI developer workstation and the EDGE definition catalog to facilitate location and retrieval of a desired EDGE definition from the catalog.

FIG. 8 depicts an exemplary system for leveraging controller data structures to facilitate locating and retrieving EDGE definitions for an HMI application.

FIG. 9 illustrates the functional relationships between an association component and a defined graphics mapping for generating catalog search criteria.

FIG. 10 depicts a system for subscribing to receive notifications of updates or revisions to selected EDGE definitions.

FIG. 11 depicts a system for processing licencing requirements in connection with retrieving a desired EDGE definition from a catalog.

FIG. 12 is a flowchart of an example methodology for publishing an externally defined graphic element definition to a searchable catalog.

FIG. 13 is a flowchart of an example methodology for providing access to a centralized catalog of externally defined graphic element definitions.

FIG. 14 is a flowchart of an example methodology for generating or refining EDGE definition search criteria based on inferred characteristics of an HMI application.

FIG. 15 is a flowchart of an example methodology for generating or refining EDGE definition search criteria based on control data structures read from a control program.

FIG. 16 is a flowchart of an example methodology for subscribing to receive revision notifications for externally defined graphic element definitions.

FIG. 17 is an example computing environment.

FIG. 18 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (*e.g*., screwed or bolted) or removably affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate *via* local and/or remote processes such as in accordance with a signal having one or more data packets (*e.g*., data from one component interacting with another component in a local system, distributed system, and/or across a network such as the Internet with other systems *via* the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; *e.g*., the set with no elements therein. Thus, a "set" in the subject disclosure includes one or more elements or entities. As an illustration, a set of controllers includes one or more controllers; a set of data resources includes one or more data resources; *etc*. Likewise, the term "group" as utilized herein refers to a collection of one or more entities; *e.g*., a group of nodes refers to one or more nodes.

Various aspects or features will be presented in terms of systems that may include a number of devices, components, modules, and the like. It is to be understood and appreciated that the various systems may include additional devices, components, modules, *etc.* and/or may not include all of the devices, components, modules *etc.* discussed in connection with the figures. A combination of these approaches also can be used.

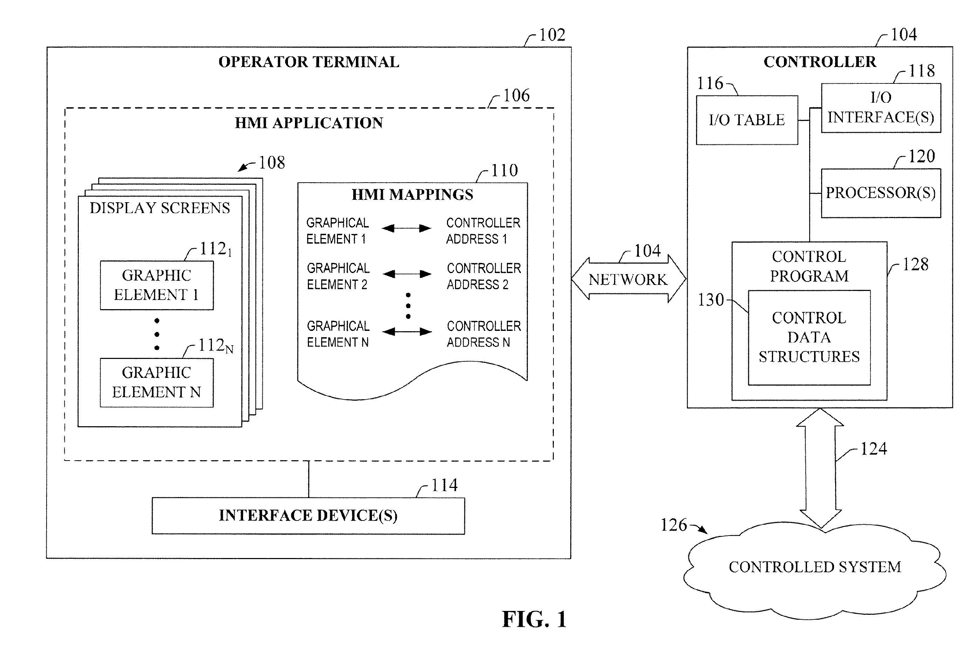

As illustrated in one or more embodiments herein, a system through which HMI developers can publish and share externally defined graphic elements in a manner that facilitates user-friendly search and retrieval according to the needs of a given industrial application is desirable. To provide context for aspects of the present innovation, FIG. 1 illustrates an overview of an exemplary control system in which interactions between an operator interface and an industrial controller are depicted. Controlled system 126 can represent any industrial process or operation under the control of controller 104. Controlled system 126 can comprise a number of devices that receive command signals from or send telemetry data to controller 104 over any suitable combination of hardwired or networked connectivity 124 to regulate a controlled process or operation. Controller 104 can comprise, for example a programmable automation controller (PAC), a soft controller executed on a personal computer, or other such controller, and can include one or more processors 120 capable of executing control program 128, Controller 104 can also include one or more I/O interfaces 118 that provide hardwired or networked connectivity to the controlled equipment and telemetry devices comprising the controlled system 126. These I/O interfaces can include, for example, digital and/or analog input modules, digital and/or analog output modules, networking modules, or the like. An I/O table 116 within the controller's memory can maintain the present analog and digital values of the various inputs and outputs read from or written to the I/O interfaces 118. That is, data values read from field devices by I/O interfaces 118 (*e.g*., analog or digital input modules) can be written to the I/O table 116. These input values can then be read by control program 128 which updates its control variables accordingly. Similarly, output values generated by the control program 128 can be written to I/O table 116, causing commensurate output data signals to be applied to the analog or digital output modules comprising the I/O interfaces 118.

Control program 128 can comprise any conceivable type of code used to process input signals read into the controller 104 and to control output signals from the controller, including but not limited to ladder logic, sequential function charts, function block diagrams, or structured text. Control program 128 can include a number of control data structures 130 that perform data handling and instruction processing functions within the program. Exemplary data structures can include control instructions and memory tags of various data types. During program development, the control instructions can be selected from a set of control instructions provided with the programming platform used to develop the program. These control instructions can include generalized instructions (*e.g*. timer blocks, counters, *etc.*) and industry-specific control instructions (*e.g*., PID instructions for process control applications, pulse multiplier instructions for motor drive control applications, axis control instructions for motion control applications, *etc.*). Memory tags are references to a data item or memory location within the controller (*e.g*., an input value, an output value, or an internal data register). A memory tag can be configured to be of a specified data type, such as binary, floating point, integer, double integer, string, *etc.* Control program 128 and its associated control data structures 130 serve to regulate controlled system 126 *via* the I/O interfaces 118.

HMI application 106 running on operator terminal 102 facilitates operator interaction with controller 104 *via* network 104, visualizing control data associated with the controlled system 126 and allowing an operator to submit control inputs into the system. HMI application 106 can comprise one or more display screens 108, each display screen containing static and/or dynamic content that conveys a current state of the controlled system. Display screen content can include, for example, graphic elements 112₁-112_{N}, where N is an integer. Graphic elements 112₁-112_{N} can comprise dynamic display objects configured to change visual state in accord with control data read from the controller 104. Such graphic elements can include numerical display objects that render a value of a control register read from the controller, bar or line graphs that display a trend of one or more data registers over time, graphical icons representing of field devices or equipment that alter their appearance to convey a current state of the devices, or other such elements. One or more graphic elements 112₁-112_{N} can also encode functionality that allows an operator to enter a value to be written to a control register within the controller 104 (*e.g.,* a setpoint value) or to set/reset a bit within the controller (*e.g*. issue a start or stop command to a device *via* the control program). Operators can interact with the display screens 108 and their respective graphic elements *via* the operator terminal's interface devices 114, which can include one or more of a mouse, a keyboard, a touch screen, voice recognition receiver, or other suitable interface devices

Linkages between a graphic element and a particular address or register in the controller can be configured using HMI mappings 110 that define associations between graphic elements and controller addresses. These HMI mappings can be configured within the graphic elements themselves during development of the HMI application. It is to be appreciated that a multi-function graphic element can be mapped to multiple controller addresses corresponding to different functional aspects of the element. For example, a valve control graphic can include both an OPEN pushbutton portion linked to a start bit in control program 128, and a state color animation linked to a corresponding "valve open" state register in the control program.

Typically, the graphic elements available to a developer of an HMI application are limited to a library of graphics bundled with the HMI development product used to create the application. Although such libraries typically include a broad range of graphic elements suitable for many diverse automation applications, the utility of an HMI application can often be improved through the use of more specialized graphic elements that are customized to more closely conform to the requirements of a specific control application. For example, an animated valve graphic used in a process control HMI may require different visual properties or control linkages than a valve graphic used in an HMI for a hydraulic power system. Moreover, the idiosyncrasies of an end user's particular automation system or equipment in use may require an even greater degree of graphic element customization. Even if an HMI software product supplier has a customer support infrastructure in place through which users of their product can request specialized graphic elements, the user must wait until the supplier develops the requested graphic, which then is only made available when the next scheduled version of the software product is released to market. That is, the release of new graphic elements is coupled to the release cycle of the development product itself.

One or more aspects of the present disclosure mitigate these inefficiencies by providing a means for externally defined graphical element (EDGE) definitions to be easily shared between end users independently of an HMI software product's release cycle. An EDGE definition can comprise new or modified graphic elements created by end users or other designers not necessarily affiliated with the manufacturer of the HMI software product (thus, externally defined). Advantageously, EDGE definitions can embody end users' expert knowledge of their own - often highly specialized and domain-specific - automation systems. The EDGE definition catalog described herein can provide tools that allow such EDGE definitions to be shared with other end users, thereby mitigating unnecessary duplication of development work.

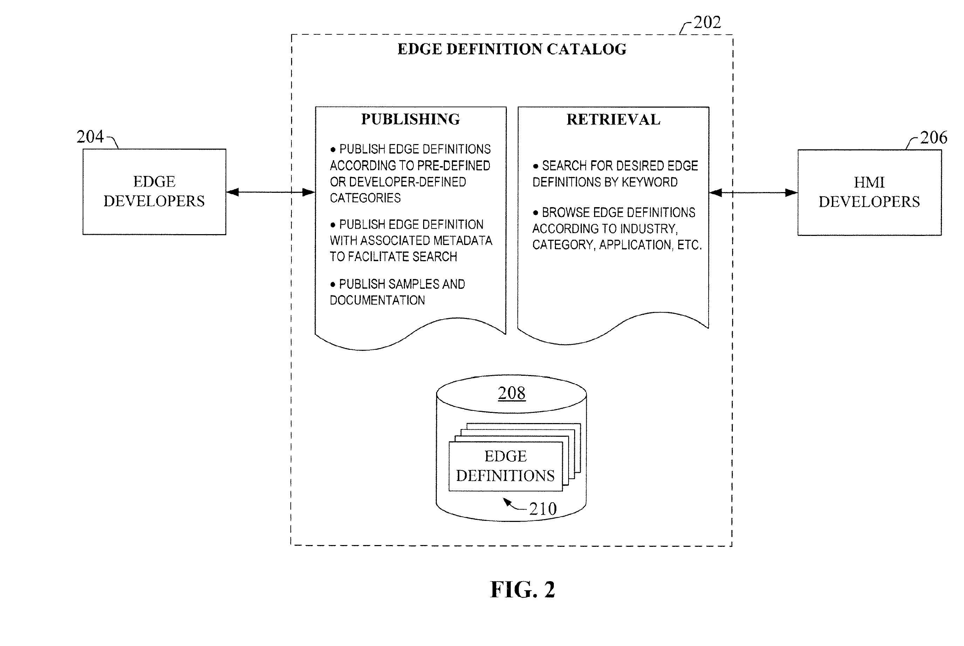

FIG. 2 illustrates a general overview of an EDGE definition catalog. EDGE definition catalog 202 can comprise a database 208 for storage of EDGE definitions 210. As discussed above, an EDGE definition is a graphic element that can be imported into an HMI development or runtime environment and embedded within an HMI display screen to serve as static or dynamic content for the screen. EDGE definition catalog 202 provides both publishing and retrieval capabilities. EDGE developers 204 can publish their new or modified EDGE definitions according to pre-defined industry-specific categories and sub-categories supported by the catalog's storage structure. The EDGE definition catalog 202 can support a hierarchical arrangement of these categories and sub-categories to simplify subsequent location and retrieval of EDGE definitions using browsable search features. The catalog can also provide a means for EDGE developers 204 to define their own categories for a given EDGE definition, thereby affording designers a degree of freedom in expanding the hierarchical storage structure of the catalog as new areas of control evolve. EDGE definition catalog 202 also supports publishing of samples and documentation together with the EDGE definitions.

HMI developers 206 wishing to locate and retrieve an EDGE definition can interact with the catalog through a search client, which can support keyword-based querying of the database 208 and/or a browsable interface that allows the developer to navigate the catalog hierarchy. Both keyword querying and browsed searching permit searching for a given EDGE definition based on such criteria as applicable industry (*e.g*., automotive, pharmaceutical, waste water treatment, *ete.*), type of control project (*e.g*., motion control, batch processing, material handling, *etc*.)*,* type of graphic required (*e.g*., equipment graphic, telemetry display, *etc.*), or any other suitable pre-defined or user-defined category.

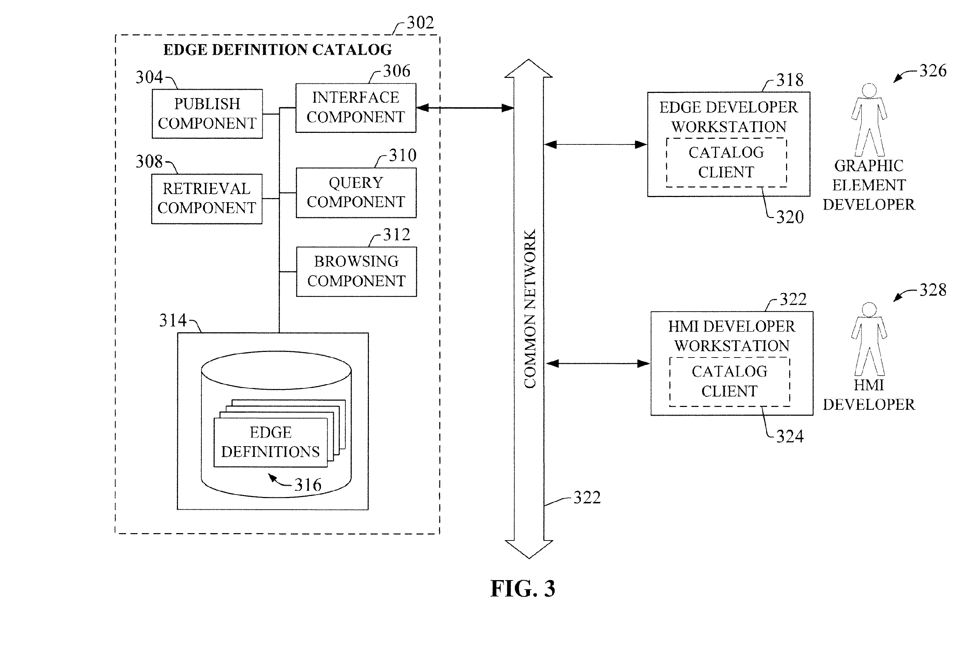

FIG. 3 is a block diagram of an exemplary EDGE definition catalog 302. The catalog 302 is configured to reside and execute on any suitable environment comprising appropriate combinations of hardware and/or software suitable for implementing the catalog functionality as embodied in the components described herein. For example, EDGE definition catalog 302 can be installed and executed on a server comprising a memory, one or more processors, and a suitable operating system. The catalog can also reside on an operator or developer workstation, which can facilitate local access to the catalog.

In one or more embodiments, EDGE definition catalog 302 can reside on a common network 322. Network 322 can be a publicly accessible network such as the Internet, a limited-access local network such as an office or plant network, or any other suitable communications architecture that affords access to the catalog 302 by graphic element developers and HMI developers. Catalog 302 can include an interface component 306 that receives and processes publishing, search, and retrieval requests. Such requests can originate from a developer workstation, such as EDGE developer workstation 318 or HMI developer workstation 322. For example, a graphic element developer 326 can interact with the EDGE definition catalog *via* a catalog client 320, which is used by EDGE developer workstation 318 to exchange data with the EDGE definition catalog 302. Similarly, HMI developer 328 interacts with the catalog 302 *via* catalog client 324. According to one or more embodiments, catalog clients 320 and 324 can be served to the respective workstations 318 and 322 by interface component 302. Such embodiments can include implementations whereby the EDGE definition catalog resides on or is connected to a web server connected to the Internet, and interface component 306 is configured to serve a web client to remote workstations when such workstations are directed to the uniform resource locator (URL) of the web server. Catalog clients 320 and 324 can also comprise designer desktops or other locally installed clients that can executed on the respective workstations to establish a connection to the interface component and to invoke the interface on the workstation desktop.

EDGE definition catalog can include a publish component 304 configured to receive submitted EDGE definitions (*e.g*., from catalog client 320 on EDGE developer workstation 318) and associated tag data, samples, and documentation, and to store the received data in the EDGE definition database 314. EDGE definitions 316 can be organized in database 314 in accordance with a hierarchy of industry-specific categories, and publish component 304 can determine an appropriate storage location within the hierarchy for a submitted EDGE definition based on tag data or metadata associated with the definition.

If a request received by interface component 306 is an instruction to locate and/or retrieve a stored EDGE definition (*e.g*., from catalog client 324 on HMI developer workstation 322), a query component 310 or a browsing component 312 can identify the subset of EDGE definitions 316 meeting the criteria submitted in the instruction, as will be discussed in more detail *infra.* When the subset has been identified, retrieval component 308 can retrieve the identified subset of EDGE definitions, which can then be returned to the source of the request *via* interface component 306.

Although EDGE definition catalog 302 is depicted in FIG. 3 as being a separate, centralized entity separated from developer workstations 318 and 322 by a common network, one or more embodiments of the subject EDGE definition catalog can reside on the workstations themselves to afford developers direct local access to the catalog.

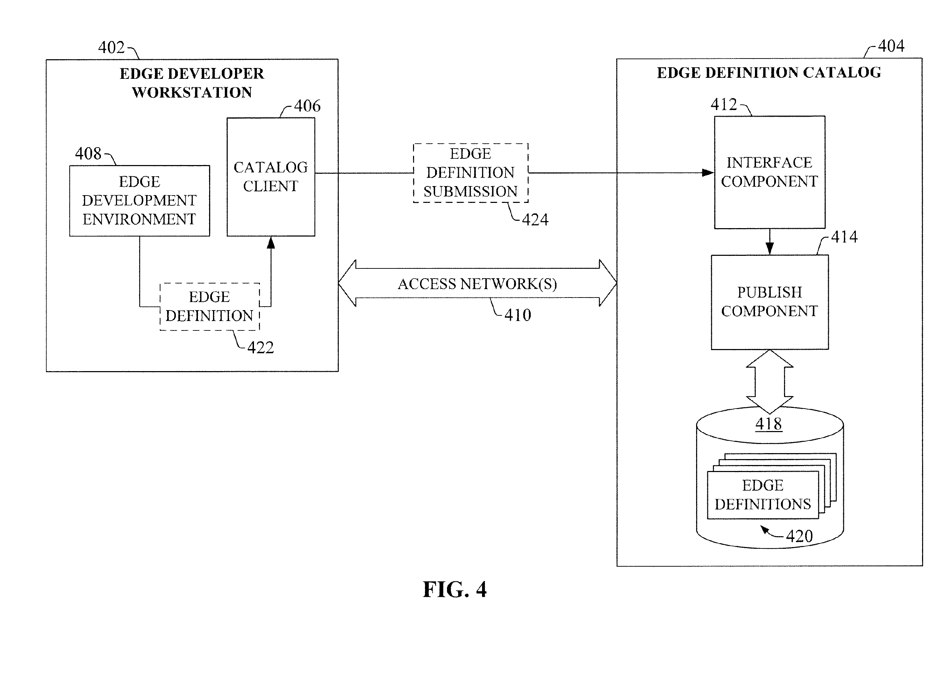

FIG. 4 illustrates the interactions between an EDGE developer workstation and the EDGE definition catalog to facilitate publication of a new or modified EDGE definition. In this example, an EDGE development environment 408 is implemented on EDGE developer workstation 402. EDGE development environment can comprise any suitable design tool or programming platform providing a designer the means to create or modify an EDGE definition for shared use. EDGE definition development can include configuring the appearance of the graphic element; defining any configuration parameters to be associated with the graphic element; defining graphic animations; defining any inputs consumed or outputs generated by the graphic element; assigning data types to the respective parameters, inputs, and outputs; defining functional dependencies for the graphic element (*e.g*., if the graphic element is intended to work in conjunction with one or more other graphic elements); or any other design aspect of the graphic.

When the new or modified EDGE definition 422 is ready for submission to EDGE definition catalog 404, the developer can invoke catalog client 406. As discussed *supra,* catalog client 406 can be a remote client (*e.g.,* a web client) served by interface component 412 of the EDGE definition catalog, or a locally executed client on workstation 402 that can be invoked and communicatively linked to catalog 404 over access network(s) 410. For configurations in which EDGE definition catalog 404 resides at a remote location with respect to EDGE developer workstation, access network(s) 410 can be, for example, the Internet, a local office or plant network, or any combination thereof. Access network(s) can comprise any appropriate combination of wireless and hard-wired connection media. It is to be appreciated that, in some embodiments, EDGE definition catalog can also reside on the EDGE developer workstation itself, either integrated as part of the EDGE development platform 408 or as a separate installation.

Catalog client 406 can include functionality that allows a designer to associated metadata with the EDGE definition 422 that can subsequently be used by the catalog to classify the EDGE definition within an industry-specific storage hierarchy, as will be discussed in more details *infra.* Catalog client 406 can also include functionality that allows the designer to submit documentation for the EDGE definition 422 to catalog 404. When the designer has prepared the EDGE definition for submission and associated all desired metadata and documentation with the definition, catalog client 406 can be instructed to send an EDGE definition submission 424 to the EDGE definition catalog 404 *via* interface component 412.

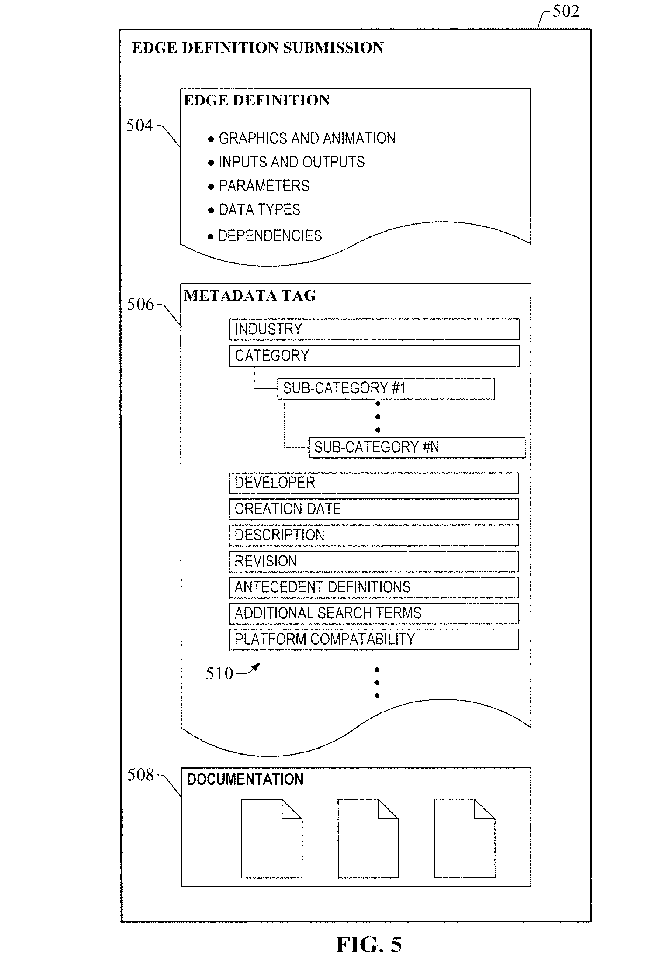

An exemplary EDGE definition submission is depicted in FIG. 5. EDGE definition submission 502 can include the EDGE definition 504 itself and any documentation 508 associated with the EDGE definition by the designer. Submission 502 can also include a metadata tag 506 containing information about the EDGE definition. Metadata tag 506 can comprise a number of data fields 510 that can be used by the catalog to store, locate, and retrieve the EDGE definition. Information in the metadata tag's data fields can be provided by the EDGE designer using tagging functionality provided by the catalog client, or can be automatically generated during development of the EDGE definition. Exemplary metadata tag 506 includes the following exemplary data fields:

**Industry:** The industry or business in which the EDGE definition is intended to be used. Exemplary values for the Industry field include "automotive," "pharmaceutical," "waste water treatment," "power supply," and "food and drug."

**Category and sub-categories:** Hierarchical classification tiers used to determine how the EDGE definition is to be classified within the catalog's industry-based hierarchy. The categories and sub-categories can relate to the type of industrial process in which the EDGE definition is applicable, or to a category of display object to which the EDGE definition belongs. Exemplary categories can include batch processing, material handling, motion control, vision, and die casting, while exemplary sub-categories can include equipment graphics, telemetry displays, and data entry objects.

**Developer, Creation Date, Description, Revision:** Name of the individual or organization submitting the EDGE definition, date of creation, functional description, and revision number of the EDGE definition.

**Antecedent Definitions:** EDGE definition(s) that served as a basis for the definition being submitted. This field is applicable where the EDGE definition is a modification or customization of a pre-existing definition stored in the catalog, and allows revision lineages to be tracked even if a definition has been modified by multiple developers to suit different automation scenarios. Associated data fields can provide revision notes explaining the modifications.

**Additional Search Terms:** Search terms and keywords not included in the other metadata fields that the designer wishes to associate with the EDGE definition to ensure the definition is identified in relevant catalog searches.

**Platform Compatibility:** List of HMI development environments or software products compatible with the EDGE definition.

It is to be appreciated that the fields depicted in exemplary metadata tag 506 are not intended to be exclusive, nor does the metadata tag require all data fields depicted in FIG. 5 to fall within the scope of the present disclosure. For example, metadata tag 506 can also include fields indicating that the developer wishes to charge for the use of the submitted EDGE definition. Such fields can include data specifying a desired purchase price for the EDGE definition and financial routing information instructing the catalog where to submit electronic payments received in conjunction with the download of the EDGE definition.

Additionally, read-write permissions for the respective fields can vary in accordance with their functions. For example, the Creation Date field can be a read-only field that is automatically set to the date when the EDGE definition was last modified. Other fields, such as the Additional Search Terms field, can have full read-write attributes, thereby allowing a user to enter data freely. Still other data fields can be populated by selecting an entry from a drop-down menu or other list associated with the data field. In one or more embodiments, the Industry, Category, and/or Sub-category fields can incorporate such drop-down menus, which can be populated by the catalog client to correspond with the Industry, Categories, and Sub-categories comprising the storage hierarchy of the catalog database 418.

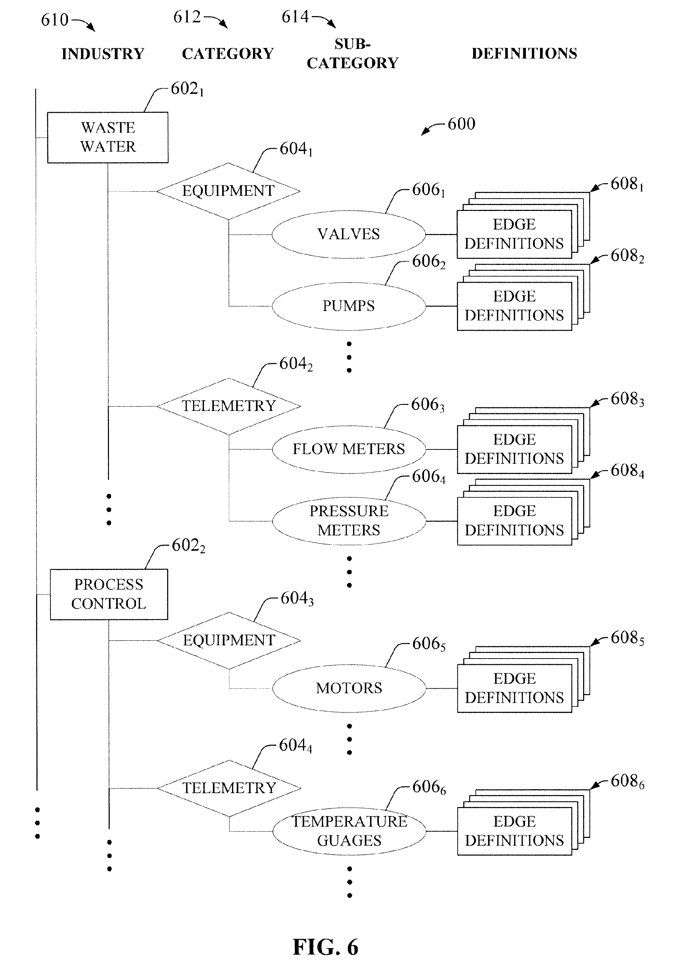

Returning to FIG. 4, the EDGE definition submission 424 is submitted to the EDGE definition catalog 404 *via* interface component 412, which passes the submission to publish component 414 for entry into database 418. Publish component 414 parses the metadata submitted in the metadata tag to determine proper classification of the EDGE definition within the storage hierarchy. As discussed above, EDGE definitions 420 can be classified within database 418 according to a hierarchy of industry-specific categories to facilitate guiding a user to a desired EDGE definition. FIG. 6 depicts an example of such a hierarchy. In this example, EDGE definitions 608₁-608₆ are organized within a three-tiered hierarchy comprising an Industry tier 610, a Category tier 612, and a Sub-Category tier 614, with each tier comprising one or more classification nodes having appropriate navigational interdependencies. Although FIG. 6 depicts only three tiers, it is to be appreciated that additional tiers can be included within the hierarchy without deviating from the scope of the present disclosure.

Two exemplary Industry classifications are depicted in FIG. 6 - Waste Water 602₁ and Process Control 602₂. Each of these Industry classifications are shown as having at least two Category classifications associated therewith - Equipment and Telemetry. The Equipment classifications can be reserved for graphic elements that represent controlled or monitored devices or equipment, such as valves, pumps, motors, drives, hoppers, thermostats, and the like. As can be seen in exemplary hierarchy 600, the Waste Water Equipment classification 604₁ includes at least two Sub-Categories - Valves 606₁ and Pumps 606₂ - while the Process Control Equipment classification 604₃ includes at least a Motors 606₅ Sub-Category. The Telemetry classifications can include EDGE definitions representing display objects used to render state or measurement data provided by telemetry devices in the field (*e.g*., animated meters or gauges, numeric display objects, *etc.*). In example hierarchy 600, the Waste Water telemetry classification 604₂ can include at least sub-categories for Flow Meters 606₃ and Pressure Meters 606₄, while the Process Control Telemetry classification 604₄ can include at least a Temperature Gauges sub-category 606₆. EDGE definition groups 608₁ - 608₆ are organized within hierarchy 600 such that each group is associated with a unique pathway through the hierarchy. For example, EDGE definition group 608₁ includes stored EDGE definitions representing valves for use in waste water treatment systems. Since some EDGE definitions may be useful in multiple types of industrial applications, a given EDGE definitions may be associated with multiple paths in the hierarchy 600.

It is to be appreciated that the hierarchical format depicted in FIG. 6 is only intended to be exemplary, and that any suitable arrangement of tiered categories can be employed without deviating from the scope of the present disclosure. For example, although Industry is depicted as the first tier of the example hierarchy in FIG. 6, a possible alternative arrangement could assign the first tier to be Equipment Type (classifications for which could include Valves, Pumps, Faceplates, Pressure Meters, Drives, *etc.*), while the Industry classifications could reside on a lower tier of the hierarchy branching from the Equipment Type classifications. Moreover, the hierarchy can comprise any number of hierarchical tiers to achieve a desired degree of classification granularity. By storing EDGE definitions in accordance with hierarchy 600, users can be guided to the subset of stored EDGE definitions suitable for their needs by navigating the hierarchical classifications until a desired subset is identified. To facilitate efficient browsing, the set of Categories and Sub-Categories depending from a given parent Industry can be specific to that industry, ensuring that the selected set of stored EDGE definitions is progressively narrowed to include only those classifications and definitions that are industry-appropriate as the user navigates the tiers of the hierarchy.

Returning to FIG. 4, upon receipt of the EDGE definition submission 424, publish component 414 parses the metadata contained in the metadata tag associated with the definition to determine how the definition is to be classified within the database hierarchy. For example, publish component 414 can read the Industry, Category, and Sub-Category fields of metadata tag 506 and associate the EDGE definition with the hierarchical path corresponding to the values in those fields. Advantageously, catalog client 406 can allow EDGE designers to either select values for those fields from a list of classifications already existing in database 418, or to define new designer-supplied industry and/or category classifications. Thus, if publish component 414 determines that a Sub-Category field in metadata tag 506 contains a new classification, the publish component can create a new branch at an appropriate location within hierarchy 600 corresponding to the new designer-supplied classification, and associate the new EDGE definition with this new pathway in database 418.

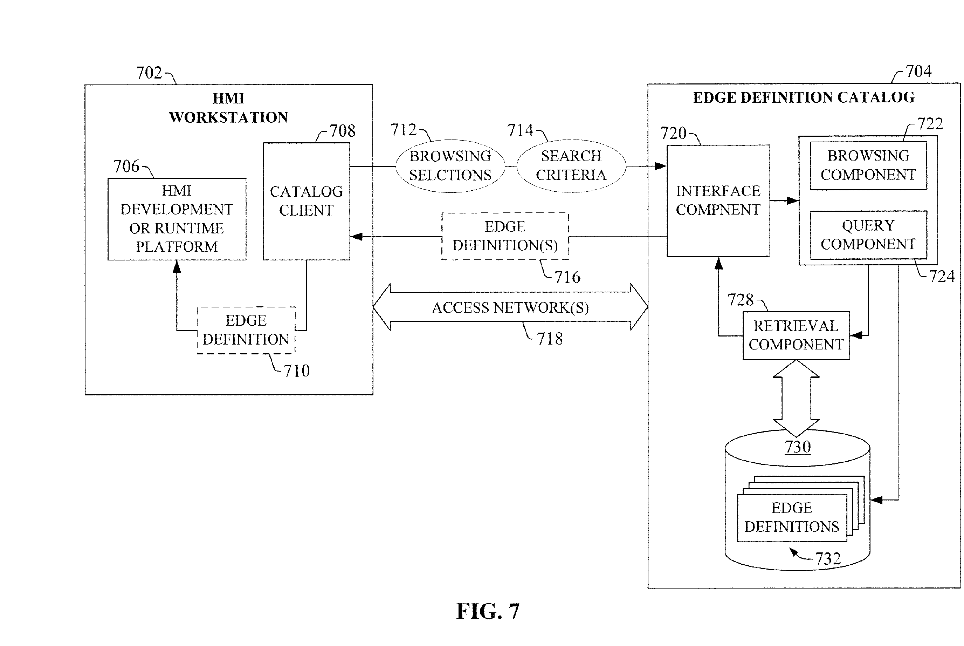

FIG. 7 illustrates the interactions between an HMI developer workstation and the EDGE definition catalog to facilitate location and retrieval of a desired EDGE definition from the catalog. In this example, an HMI development or runtime platform 706 is implemented on workstation 702, which can be any general purpose or specialized computer capable of executing the HMI platform. HMI development/runtime platform can comprise any suitable software product used for developing and/or executing HMI applications used to visualize at least a portion of an industrial process (*e.g*., HMI application 106 of FIG. 1). During HMI development, a designer may wish to access EDGE definition catalog 704 to locate a designed EDGE definition for inclusion in one or more display screens being developed. To facilitate access, catalog client 708 can be invoked as described above in connection with FIG. 4. Catalog client 708, used for retrieval of EDGE definitions, can be similar to catalog client 406 in FIG. 4 used to publish definitions to the catalog. That is, the client catalog can include combined functionality for both publishing and retrieval of EDGE definitions. Alternatively, publishing and retrieval functionalities can be segregated into separate catalog clients, such that an appropriate client is provided depending on whether the user wishes to publish or retrieve an EDGE definition.

In one or more embodiments, location and retrieval of an EDGE definition can be effected by submitting keyword-based search criteria 714 to the catalog *via* client 708 across access network(s) 718. As with the definition publishing example depicted in FIG. 4, the EDGE definition catalog 704 can reside at a remote location with respect to the HMI work station 702. In such cases, access network(s) 718 can comprise, for example, the Internet, a local office or plant network, or any combination thereof. In some conceived embodiments, EDGE definition catalog 704 can reside on the HMI workstation itself. According to these embodiments, the catalog can be bundled with the HMI development or runtime platform itself, or can be a separate installation that can be accessed by and interact with HMI development/runtime platform 706.

Search criteria 714 can comprise one or more keywords entered by the user *via* the catalog client 708. Typically, a user will submit keywords that identify one or more of an industrial domain, a type of automation application, a device or piece of equipment, an industry standard, or any other terms that can be used by the catalog to identify a desired subset of stored EDGE definitions 732. In one or more embodiments, a subset of the search criteria 714 can also be inferred by the catalog client 708 based in part on properties of the HMI application being developed (or running) within HMI platform 706, or the controller program for which the HMI application acts as an interface. For example, catalog client 708 can poll the HMI application and identify tags, function blocks, graphic elements, *etc.* within the application that can be leveraged to infer one or more of the industrial domain in which the HMI is intended to be used, equipment or devices in use within the controlled system, or other such characteristics of the HMI application. For example, if catalog client 708 polls the HMI application and identifies a graphic element or function block most commonly used in motion control interfaces, the client 708 can infer that the HMI is to be used as an operator interface for a motion control system. Accordingly, the client 708 can refine the search criteria 714 to prioritize (or retrieve exclusively) EDGE definitions that are tailored for motion control applications. If the HMI workstation is communicatively coupled to a controller, catalog client can likewise poll the controller program for aspects (instruction blocks, rung comments, subroutine titles, tags, *etc*.) that can be used to infer the type of control application being developed, and refine the search criteria 714 accordingly.

Moreover, one or more embodiments of the catalog client 708 can generate a subset of the search criteria based in part on a graphic element submitted to the client. Such embodiments afford a user the ability to search for EDGE definitions that are structurally or functionally similar to a submitted graphic object or EDGE definition. In such embodiments, the catalog client can parse the internal structure of the submitted graphic object to ascertain the object's structure, interconnections, inputs, outputs, visual appearance, etc., and generate search criteria based on this analysis designed to identify EDGE definitions in the catalog that are similar in function and/or appearance to the submitted graphic object.

When search criteria 714 is submitted to the catalog 704, interface component 720 receives the search criteria 714 and passes the criteria to a query component 724, which identifies a subset of stored EDGE definitions 732 satisfying the submitted criteria. To determine whether a given EDGE definition meets the search criteria 714, query component can cross-reference the search terms contained within the search criteria against the given definition's metadata tags, hierarchy classifications, inherent properties of the EDGE definition itself (*e.g*., parameters, inputs and outputs, data types, animation types, *etc.*), or other defined or inherent properties of the EDGE definition. Moreover, one or more embodiments of query component 724 can support "approximate match" searching, such that exact matches between the submitted search criteria 714 and a potentially relevant EDGE definition's metadata or properties is not necessary in order for the EDGE definition to be selected for inclusion in the retrieved subset. In this regard, any suitable "fuzzy search" methodology can be employed to ensure that useful EDGE definitions are returned even in the absence of an exact match. In one exemplary approach, upon receipt of search criteria 714, query component 724 can calculate one or more figures of merit for each EDGE definition 732 in database 730 relative to the search criteria. Each definition's figure of merit is a relative measure of how relevant the given definition is likely to be to the search criteria. For example, if a search criterion stipulates that a requested EDGE definition is to be used in an automotive HMI application, the query component 724 can generate an "industry" figure of merit for each EDGE definition in the database indicating a relative applicability to the automotive industry. EDGE definitions whose metadata explicitly specifies "automotive" as an applicable industry will be given the highest figure of merit. EDGE definitions whose industry metadata specifies a different industry but one having similarities to the automotive industry (*e.g*., commonly employs similar equipment or processes, often produces materials or products used by the automotive industry, *etc.*) will be given a comparatively high (though not the highest) figure of merit with respect to definitions designed for a non-related industry. When all figures of merit have been identified, query component 724 can identify the subset of EDGE definitions 732 having a figure of merit above a threshold value as being sufficiently relevant to the search criteria. According to one or more embodiments, multiple figures of merit can be calculated for each EDGE definition for a given set of search criteria, where each figure of merit relates to a particular search dimension or aspect (*e.g*., industry, category, desired functionality, *etc*.). In such embodiments, a composite figure of merit can be computer based on the individual figures of merit for the various search dimensions, and the relevant subset of EDGE definitions can be selected by the query component based on this composite value.

After the subset of relevant EDGE definitions has been identified, query component 724 can instruct retrieval component 728 to retrieve the identified definitions from database 730. Retrieval component 728 can then pass the identified subset to the interface component 720, which can return the retrieved EDGE definitions 716 to the catalog client 708 for selection by the HMI developer. The HMI developer can select a desired EDGE definition 710 from the returned subset, and import the selected EDGE definition into the HMI development platform 706 for use in an HMI project.

Catalog client 708 can also support browsed searching of the catalog database 730 by allowing the designer to navigate the classification hierarchy until a desired EDGE definition is found. To this end, client 708 can provide a browsable interface that allows the user to select classifications corresponding to the nodes of the database hierarchy (*e.g*., hierarchy 600 of FIG. 6). For example, client 708 can present a list of industries represented in the database hierarchy on a home menu. Selection of an industry from this list can cause the client submit a corresponding browsing selection 712 to interface component 720, which routes the browsing selection to a browsing component 722 for processing. Browsing component 722 instructs retrieval component 728 to retrieve categories, sub-categories, and other classifications associated with the selected industry. Interface component 720 returns this information to the catalog client 708, which can render the available categories associated with the selected industry and, optionally, a list of EDGE definitions associated with all categories and sub-categories depending from the selected industry. The list of EDGE definitions can be gradually narrowed as the user navigates through lower tiers of the hierarchy in this manner until the user selects an EDGE definition from the list or until a lowest tier of the hierarchy is reached.

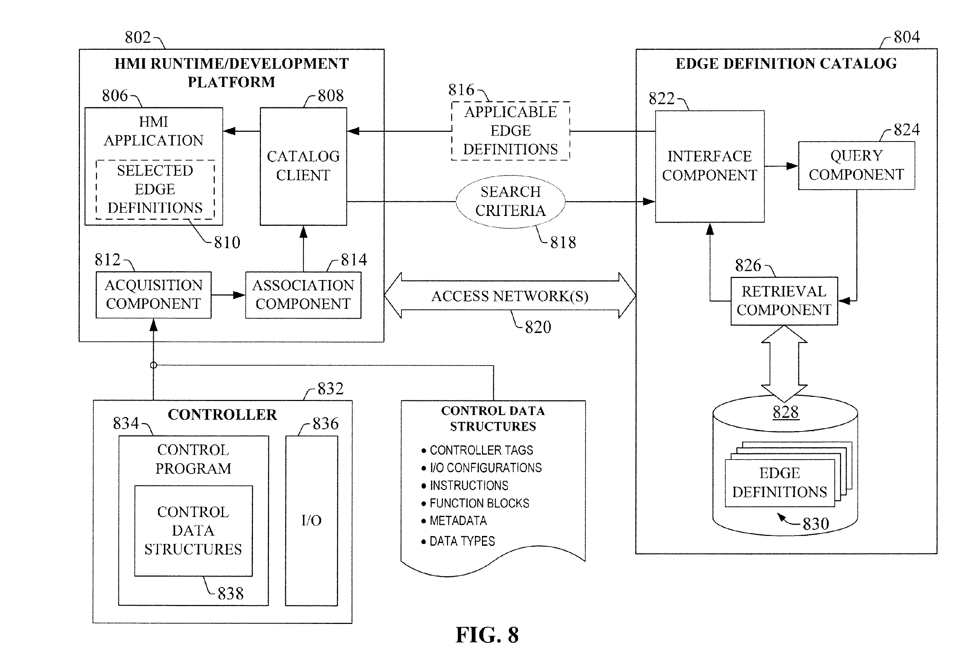

FIG. 8 illustrates a technique for leveraging controller data structures to facilitate locating and retrieving EDGE definitions for an HMI application according to one or more embodiments of the present disclosure. Such embodiments can at least partially automate the process of locating suitable externally defined graphic elements based on information read from an associated control program and a predefined mapping between control data structures and display object types. In this example, an HMI runtime or development platform 802 hosts HMI application 806. HMI runtime/development platform 802 can reside, for example, on an operator interface or developer workstation, and can comprise any suitable operator interface development or runtime software product. HMI application 806 is designed to act as an operator interface for controller 832 executing control program 834, similar to the relationship between HMI application 106 and controller 104 depicted in FIG. 1 and described *supra.* HMI application 806 can be a development mode application (*e.g.,* an application still in the design phase) or can be an active runtime application executing on an operator terminal and providing visualization and operator control functionality for control program 834. As discussed above in connection with FIG. 1, control program 834 can include a number of control data structures 838 that assist with data management and instruction processing within the program, such as control instructions and memory tags of various data types.

According to one or more embodiments, HMI runtime/development platform 802 can include an acquisition component 812. Acquisition component 812 can read one or more control data structures 838 from controller 832. Control data structures extracted by the acquisition component can include, but are not limited to, controller tags and their associated data types (*e.g*., real, integer, binary, double, string, *etc.*), instructions and/or function blocks used in the control program, and any metadata associated with the various program elements. Acquisition component 812 can also read, as control data structures, configuration information for the I/O modules 836 used to exchange digital and analog signaling between the control program 834 and the field devices comprising the controlled system.

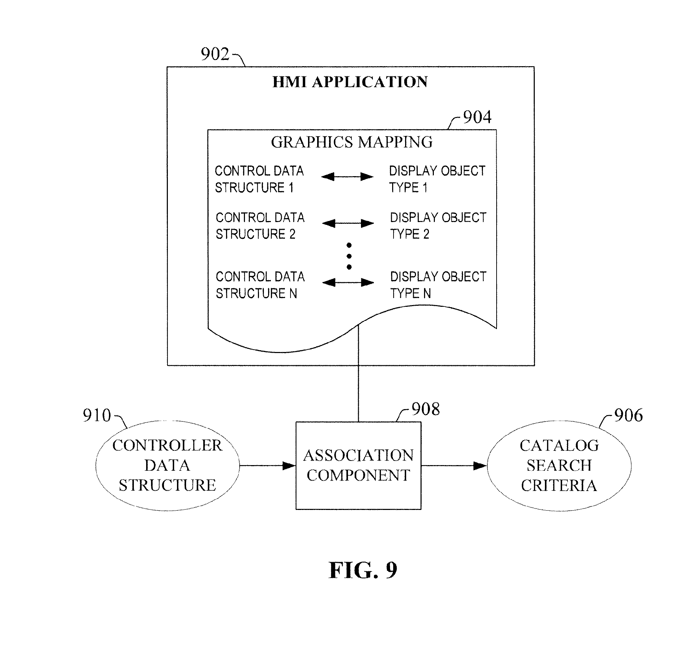

Upon reading the one or more control data structures from control program 834, acquisition component 812 can provide the control data structures to association component 814, which can link the control data structures to respective graphic elements or graphic element types according to a defined graphics mapping associated with HMI application 806. FIG. 9 illustrates the functional relationships between the association component and the defined mapping. As noted above, graphics mapping 904 can be defined and associated with the HMI application 902. This mapping can be predefined by the vendor of the HMI development platform, configured by the end-user of the HMI development platform, or both. Mapping 904 defines associations between control data structures and display objects or display object types. For example, one type of mapping can associate a tag's data type with one or more display object types. In another example, a control data structure identifying an I/O module in use in controller 832 can also be mapped to a particular display object type. Likewise, control data structures representing instructions used within control program 834 can be associated with selected display object types *via* mapping 904. Essentially, graphics mapping 904 can allow a user to pre-specify preferred display object types to be used for visualization of respective control data structures. The preferred display object types can be defined in the mapping in terms of display object categories (*e.g*., digital numeric displays, graphical faceplates, graphical meters of a selected type, *ete*.)*,* display object properties (*e.g*., display objects having specified parameters, animation objects that employ a specified color standard, *etc*.)*,* or other display object features.

Graphics mapping 904 can further allow a user to defined usage-based associations between control data structures and display object types. That is, an association linkage between a control data structure and one or more display object types can be conditional on how the control data structure is used in control program 834 (*e.g.,* in which subroutine or control module of the control program the control structure is located). As an example of such a mapping, a user can specify that controller tags having a REAL data type and located in a "Die Cast" subroutine are to be associated with bar graph display objects, while similar tags located in a "Sand Casting" subroutine are to be associated with line graph display objects.

Association component 908 can receive a controller data structure 910 read by the acquisition component and cross-reference this controller data structure with the graphics mapping 904 associated with the HMI application 902. Using this information, association component 908 can generate EDGE definition catalog search criteria 906 for the control data structure based on the mapping of preferred display object types. That is, for a given controller data structure read from a control program, association component can generate search criteria for locating one or more suitable EDGE definitions that can be imported into HMI application 806 for visualization of and/or operator interaction with the controller data structure.

Returning now to FIG. 8, the search criteria generated by association component 814 can be passed to catalog client 808 and submitted to the EDGE definition catalog at 818 *via* interface component 822. Using these search criteria, query component 824 and retrieval component 826 can retrieve and return an applicable subset of EDGE definitions 830 from database 828 that satisfies the criteria, as described above in connection with FIG. 7. The applicable EDGE definitions 816 can then be passed to the catalog client 808 in the HMI development/runtime environment, and one or more selected EDGE definitions 810 from the subset can be imported into HMI application 806 and used to visualize the control data structure read from the control program.

It is to be appreciated that the EDGE definition search and retrieval functions described above in connection with the embodiments of FIG. 8 can be performed while HMI application is in runtime mode and is actively monitoring controller 832 in connection with controlling an industrial process. Thus, advantageously, if online modifications or additions are made to control program 834 after deployment (*e.g*., by a line side engineer or maintenance personnel) that introduce new control data structures 838 to the program, acquisition component 812 and association component 814 can read these new control data structures and facilitate retrieval of suitable EDGE definitions from EDGE definition catalog 804 in accordance with the predefined graphics mapping. These retrieved EDGE definitions can then be imported into HMI application 806 during runtime without the need to modify the application off-line and redeploy the modified application.

Although acquisition component 812 and association component 814 are depicted in FIG. 8 as refining the search criteria based on control data structures 838 read from control program 834, one or more embodiments are also contemplated wherein acquisition component 812 can poll an industrial network to identify other field devices comprising the automation system. For example, after HMI application 802 is deployed on an automation network, acquisition component 812 can scan the network to discover devices, equipment, etc. that may require visualization on the HMI application. Acquisition component 812 can identify such device by reading an identifier inherent in the device, such as a media access control (MAC) address. Acquisition component 812 can then pass this identifier to association component 814, which can generate search criteria based on the device identifier to locate and retrieve a suitable EDGE definition for visualizing the discovered device.

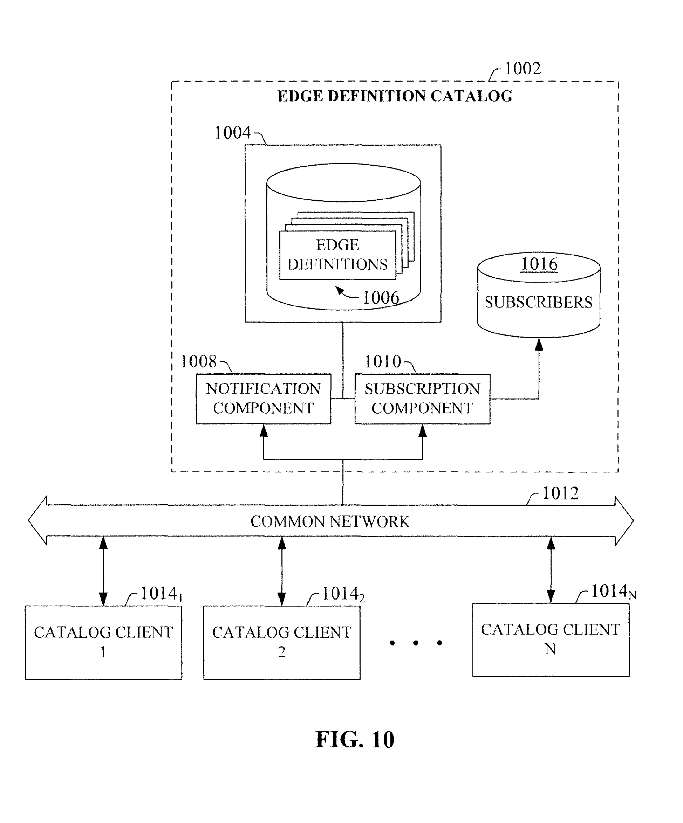

One or more embodiments of the subject innovation can also allow users to subscribe to receive notifications of updates or revisions to selected EDGE definitions in the catalog, as illustrated in FIG. 10. Subscription and notification functionality can be beneficial in embodiments where the EDGE definition catalog 1002 resides on a common network 1012 (*e.g*., the Internet) and is accessible to multiple clients 1014₁-1014_{N} (where N is an integer). Catalog clients 1014₁-1014_{N} can be similar to clients 406 and 708 of FIGs. 4 and 7. That is, the clients can be served to their respective host workstations remotely from an interface component of EDGE catalog 1002, can be bundled with the HMI or graphic development software installed on the workstations, or can be a separate stand-alone installation on the workstations. EDGE definition catalog 102 can include a subscription component 1010, which receives requests from one or more of the clients 1014₁-1014_{N} to subscribe to selected EDGE definitions. A request to subscription component 1010 can be explicitly submitted by a user *via* the catalog client; *e.g.,* by browsing to a selected EDGE definition as described *supra* and flagging the definition for future notifications. The catalog client can also provide a means for the user to enter a preferred contact method for receiving notifications of revisions made to the selected EDGE definition (*e.g*., an email address, cell phone number, *etc*.)*.* Alternatively, subscription component 1010 can automatically subscribe a client to receive notifications relating to a given EDGE definition when the client retrieves the EDGE definition from the database 1004. Such automated subscriptions presume that a designer will wish to acquire future revisions of an EDGE definition retrieved by the designer for use in an operator interface application. Subscription component 1010 can maintain a list of received subscription requests in a subscribers database 1016. Records in subscribers database 1016 can include, for example, a user identifier, an EDGE definition identifier, a preferred notification method (*e.g*., email, text message, voice message, *etc.*), and any other suitable subscription information.

EDGE definition catalog 1002 can further include a notification component 1008 that works in conjunction with subscription component 1010. Notification component 1008 monitors database 1004, and in particular tracks revisions made to individual EDGE definitions stored therein. For instance, if a new EDGE definition is published to the catalog (*e.g*., using the techniques described above in connection with FIGs. 4 and 5), notification component can determine if the newly published EDGE definition is a revision of a pre-existing definition in the database. Notification component 1008 can make this determination, for example, by reading the "antecedent definitions" field of metadata tag 506 (see FIG. 5), which identifies any EDGE definitions that served as bases for the newly published definition.

Upon determining that the newly published EDGE definition is a revision of a pre-existing definition, notification component 1008 can reference subscribers database 1016 to determine if any clients are subscribed to receive notifications relating to the pre-existing definition which served as an antecedent for the new definition. If so, notification component 1008 can send a notification to the subset of clients 1014₁ - 1014_{N} on the subscription list that a new revision of the pre-existing EDGE definition is available for retrieval from the catalog. Such notifications can be transmitted by the notification component to each client's preferred contact destination as defined in the subscriptions. Notification component 1008 can transmit the notifications to the appropriate users according to each user's preferred notification method as indicated in the respective subscriptions, including, but not limited to, email, text message, voice message, notification *via* the catalog client, *etc.*

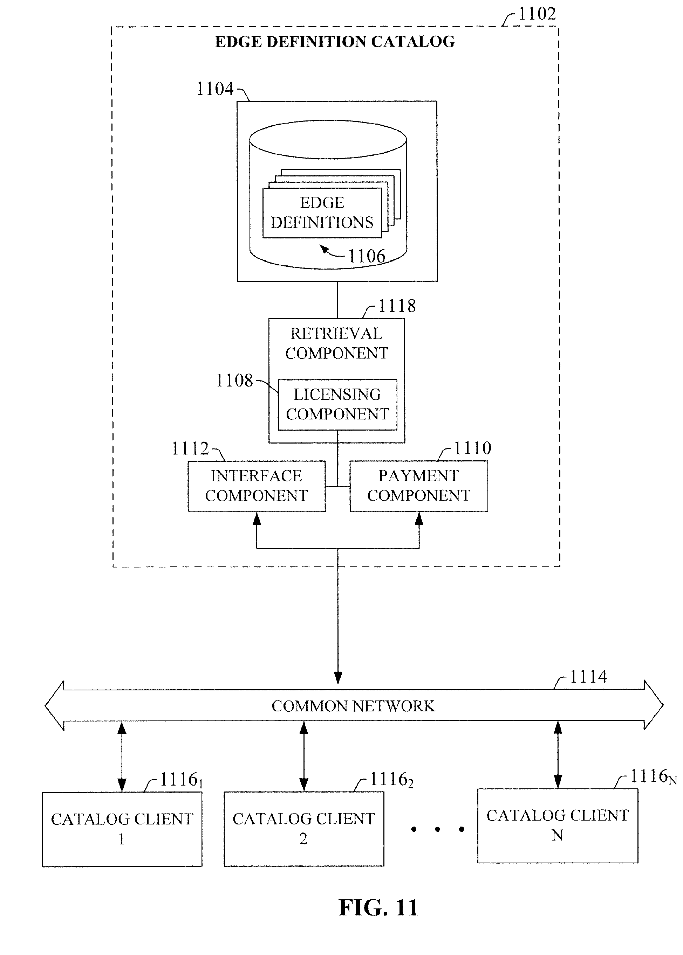

The EDGE definition catalog of the present disclosure provides a means for HMI designers to share their industry- and application-specific graphic element designs with other designers, thereby mitigating duplication of design efforts and allowing HMI developers to easily leverage the experience and expertise of other developers. While some EDGE definition developers may wish to publish their graphic element definitions for free distribution to other system designers, it is understood that other EDGE definition developers may wish to charge a license fee for the download and use of their graphic element definitions. Accordingly, one or more embodiments of the subject EDGE definition catalog can include a licensing component that determines whether a requested EDGE definition is associated with a license requirement as illustrated in FIG. 11. In one or more exemplary embodiments, when an EDGE definition is published to the catalog, the metadata tag for the EDGE definition can include a field indicating whether the graphic element designer wishes to apply a license requirement to the definition. Associated fields can allow the graphic element designer to specify a type of license (unlimited use, single-instance use, *etc.*), a desired license fee, and payment routing information. When one or more clients 1116₁-1116_{N} subsequently submit a request for the licensed EDGE definition over common network 1114, interface component 1112 passes the request to the retrieval component 1118 for processing, as described above in connection with FIG. 7. According to the embodiment(s) illustrated in FIG. 11, retrieval component can include a licensing component 1108 that determines whether the requested EDGE definition has a publisher-defined license requirement.

If a license requirement is identified, a payment component 1110 can send a prompt to the catalog client from which the request was received instructing the user that a payment must be submitted before the EDGE definition can be retrieved for use. The catalog client can provide an interface that allows the user to submit the payment to the catalog 1102 electronically (*e.g*., by providing bank account routing information, credit or debit card information, electronic payment transfer information, or any other suitable payment method). Payment component 1110 can receive the electronic payment information and route the payment information to the necessary financial institutions (determined based on the financial information provided by the EDGE definition publisher *via* the metadata tag). When payment has been confirmed, retrieval component 1118 can retrieve the requested EDGE definition and return the definition to the client.

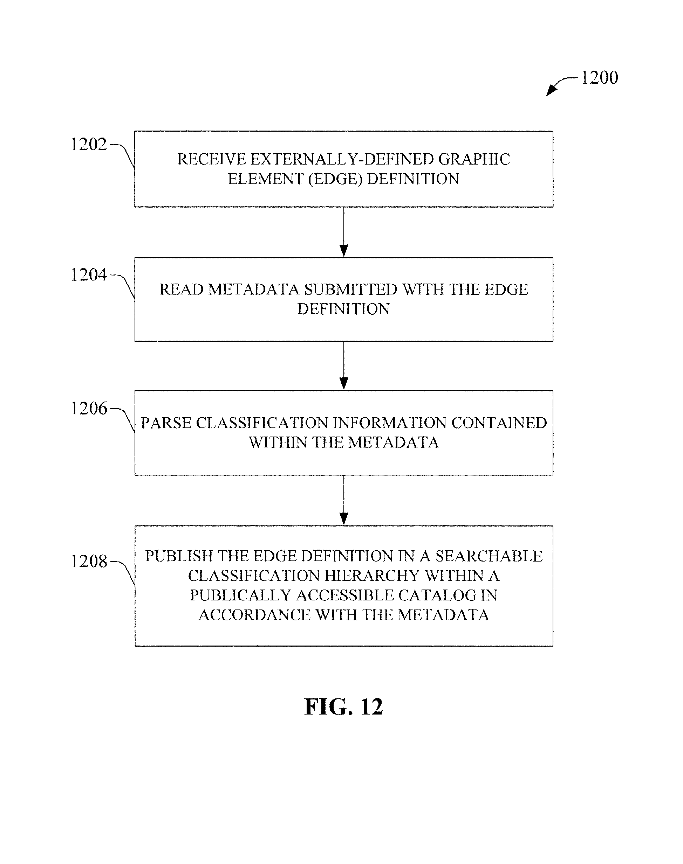

FIGs 12-16 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 12 illustrates an example methodology 1200 for publishing an externally defined graphic element definition to a searchable catalog. At 1202, an externally defined graphic element (EDGE) definition is received. The EDGE definition can be received, for example, from a catalog client running on a developer's workstation. The client can comprise, for example, a specialized designer desktop running on the workstation, a web client served remotely to the workstation by the searchable catalog, a client application bundled with a development software product, or any other suitable client that can be used as an interface for the searchable catalog. At 1204, metadata submitted with the EDGE definition is read. The metadata can include, but is not limited to, such information as an industrial domain in which the EDGE definition is intended to function, categories and sub-categories for classifying the EDGE definition within the catalog, identification of an antecedent EDGE definition that served as a basis for the submitted definition, a revision number, or a date of creation, In one or more embodiments, the metadata can be submitted with the EDGE definition encoded in a metadata tag.

At 1206, classification information contained within the metadata read at step 1204 is parsed. This classification information can comprise the aforementioned industrial domain, specified categories and sub-categories, antecedent EDGE definition, or any other metadata that can be used to determine an appropriate storage classification for the submitted definition. At 1208, the EDGE definition is published in a searchable classification hierarchy within the catalog in accordance with the hierarchical classification information. If the parsed classification information corresponds to a classification pathway already existent in the hierarchy, the EDGE definition can be classified such to be associated with the pathway indicated by the classification information. Alternatively, if the parsed classification information includes a new classification, the hierarchy can be expanded to include a new pathway defined by the metadata's classification information.

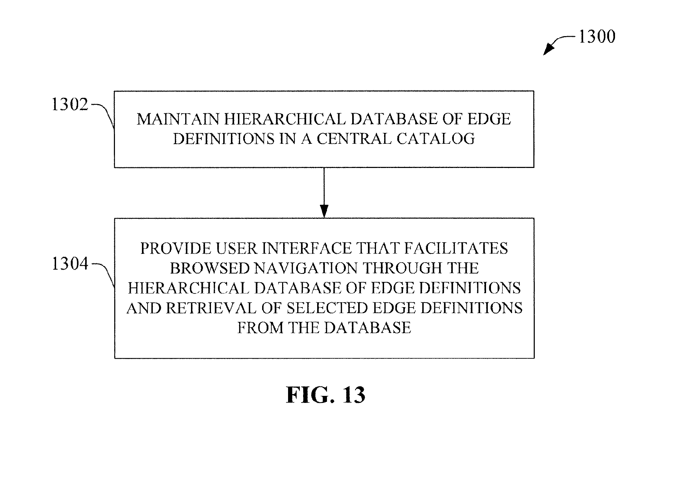

FIG. 13 illustrates an example methodology 1300 for providing access to a centralized catalog of externally defined graphic element definitions. At 1302, one or more EDGE definitions are maintained in a hierarchical database. As discussed *supra,* the EDGE definitions in such a database can be organized in a hierarchical classification structure that categorizes the definitions according to such properties as intended industrial domain, graphic element type, animation properties, color code standards, *etc.* At 1304, a user interface is provided that facilitates browsed navigation through the hierarchical database and retrieval of selected EDGE definitions from the database. The user interface can allow a user to navigate through the classification nodes and branches of the hierarchy *via* progressive selection of categories and sub-categories until one or more desired EDGE definitions are located.

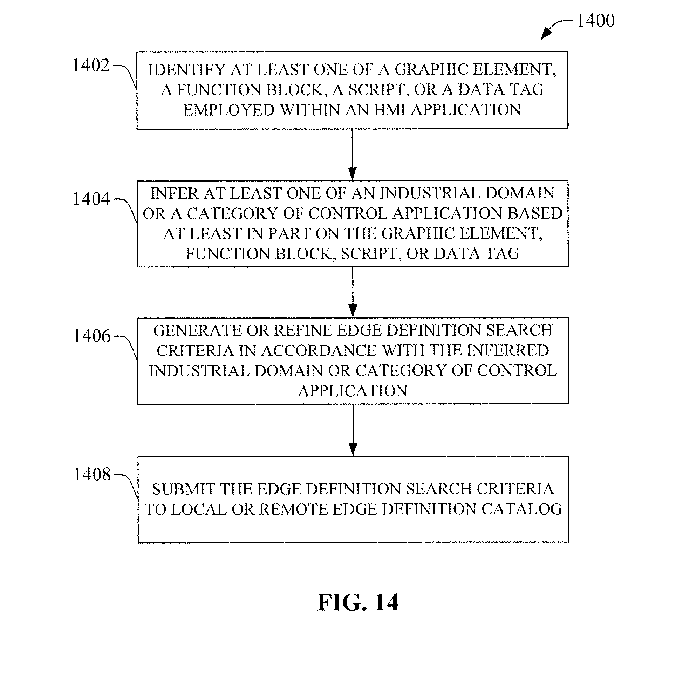

FIG. 14 illustrates an example methodology 1400 for generating or refining EDGE definition search criteria that can be used to locate and retrieve EDGE definitions suitable for a given HMI application. At 1402, at least one of a graphic element, a function block, a script, or a data tag employed within the HMI application can be identified. In one or more embodiments, the identification step can be performed by a client interface for an EDGE definition catalog. The identifying step can comprise polling the HMI application for characteristic elements that can be used to infer the industry or type of control application to which the HMI application relates.

At 1404, at least one of an industrial domain or a category of control application can be inferred based at least on the characteristic elements identified in step 1402. In one or more embodiments, this inference can also be performed by the catalog client. For example, if an identified graphic element (or a configuration thereof) is typically employed in connection with vision systems, it can be inferred that the HMI application is an operator interface for a vision system. Likewise, identification of a function block commonly associated with motion control can cause an inference to be made that the HMI application is used in a motion control system.

At 1406, EDGE definition search criteria is generated or refined in accordance with the inferred industrial domain or control application. For example, the search criteria can be constructed to prioritize (or retrieve exclusively) EDGE definitions that are applicable or specially tailored to the inferred industrial domain or category of control application. At 1408, the customized search criteria are submitted to a local or remote EDGE definition catalog to facilitate location and retrieval of a suitable set of candidate EDGE definitions satisfying the search criteria.

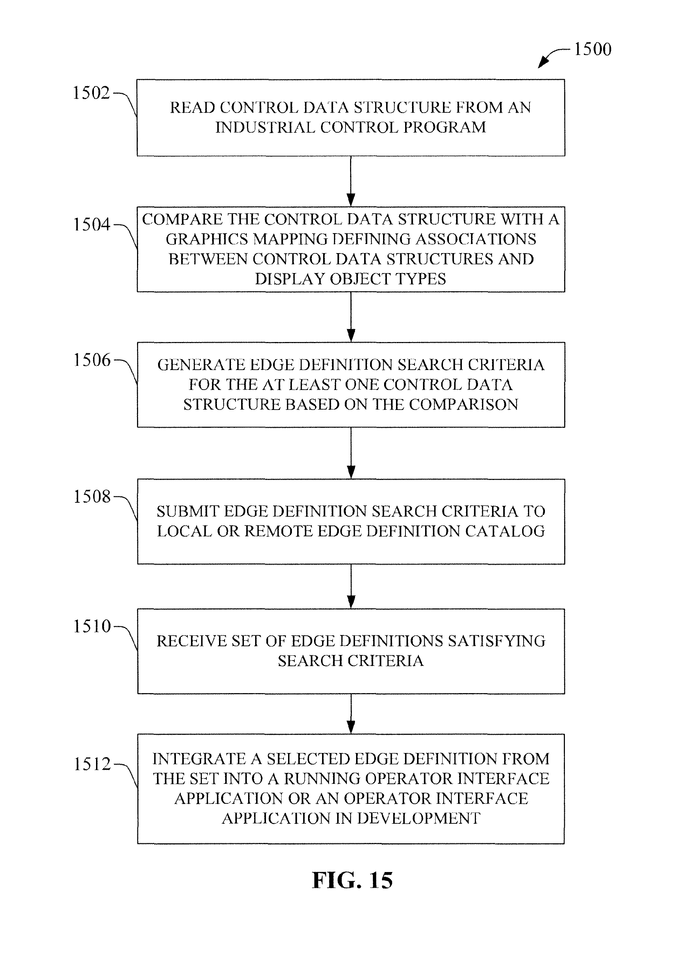

FIG. 15 illustrates an example methodology for generating or refining EDGE definition search criteria based on control data structures read from a control program. At 1502, a control data structure can be read from an industrial control program. Control data structures can include, for example, control instructions and memory tags of various data types used within the program. At 1504 the control data structure can be compared with a graphics mapping that defines associations between control data structures and display object types. This graphics mapping can be a vendor- or user-defined mapping associated with an HMI application. The mapping allows a user to specify preferred display object types to be used in the HMI application for visualization of a given tag data type, controller instruction, *etc.*

At 1506, EDGE definition search criteria can be automatically generated for the control data structure based on the comparison made in step 1504. For example, if the control data structure is a controller instruction related to PID control, and the graphics mapping stipulates that such instructions are to be visualized using a graphical faceplate of a certain format and color animation standard, the EDGE definition search criteria can be generated to prioritize (or retrieve exclusively) EDGE definitions substantially matching the faceplate type specified in the mapping. At 1508, the generated EDGE definition criteria can be submitted to a local or remote EDGE definition catalog that stores externally defined graphic element definitions in accordance with a hierarchical classification scheme, as described above.

At 1510, a set of EDGE definitions satisfying the search criteria can be received from the catalog. At 1512, a selected EDGE definition from the set can be integrated into the HMI application used to visualize the process regulated by the control program. The EDGE definition can be integrated while the HMI application is in either development mode (prior to deployment) or runtime mode (after deployment).

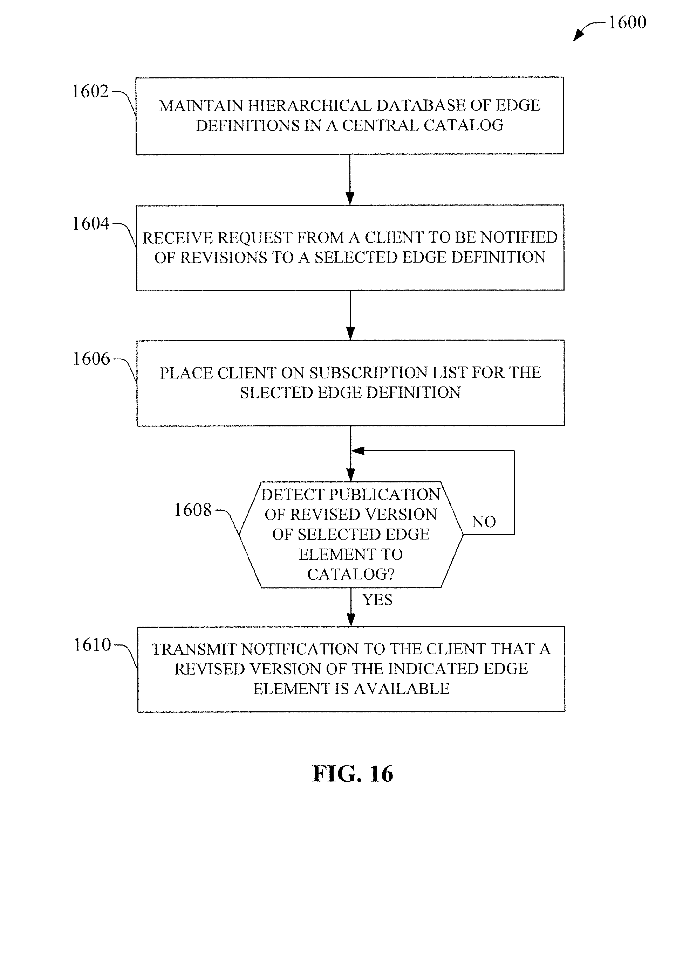

FIG. 16 illustrates an example methodology for subscribing to receive revision notifications for externally defined graphic element definitions. At 1602, a hierarchical database of EDGE definitions is maintained in a central EDGE definition catalog. At 1604, a notification request from a client is received. The notification request establishes that a user of the client wishes to be notified of revisions to a selected EDGE definition. The request can include, for example, an identification of the EDGE definition of interest, a preferred contact method and/or format for receiving the notifications, and other pertinent information. Alternatively, a request to be notified of revisions to a selected EDGE definition can be automatically generated when a user retrieves the selected EDGE definition from the catalog. In such cases, request information such as preferred contact method can be acquired from registration information provided by the user before being allowed access to the catalog. At 1606, the client (or user associated with the client) is placed on a subscription list for the selected EDGE definition.

At 1608, a determination is made regarding whether a revised version of the selected EDGE definition has been published to the catalog. Such a determination can be made based at least in part on metadata submitted with the newly published EDGE definition, which can include an antecedent definition identifier and a revision number. This metadata can be used to track the development lineage of a given EDGE definition even if multiple developers have implemented modifications to the definition at various times. If no revision is detected at step 1608, the flow returns to repeat step 1608 and continue monitoring for revisions. If publication of a revised version is detected, a notification is transmitted to the client at 1610. The notification can be sent to the client in accordance with the preferred contact method and format identified in the initial request.

Embodiments, systems, and components described herein, as well as industrial control systems and industrial automation environments in which various aspects set forth in the subject specification can be carried out, can include computer or network components such as servers, clients, programmable logic controllers (PLCs), communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC as used herein can include functionality that can be shared across multiple components, systems, and/or networks. As an example, one or more PLCs can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC can also communicate to and control various other devices such as I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet and ControlNet. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

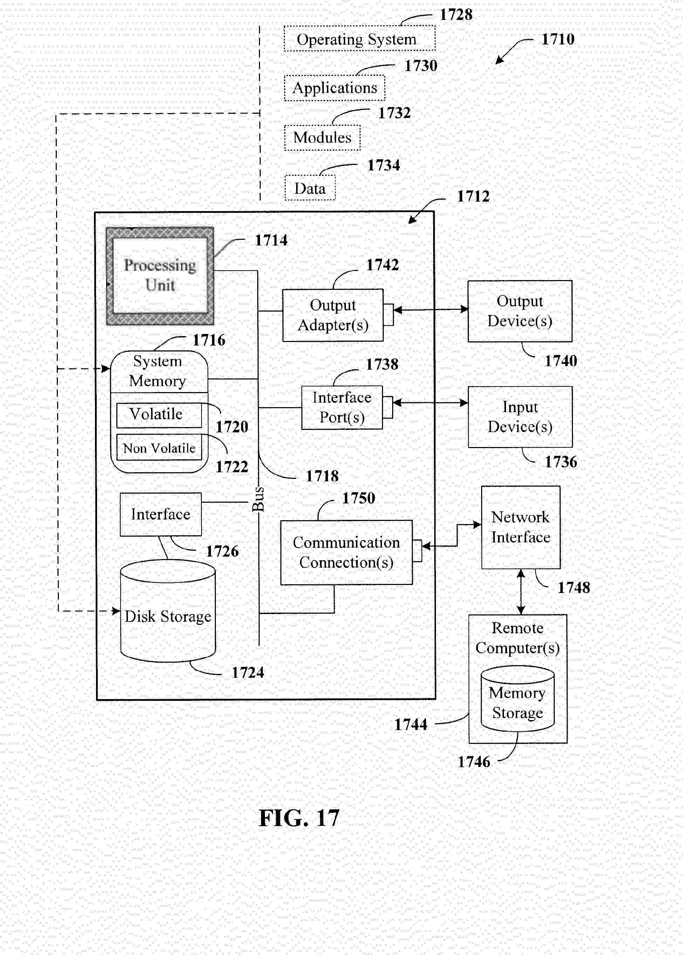

With reference to FIG. 17, an example environment 1710 for implementing various aspects of the aforementioned subject matter includes a computer 1712. The computer 1712 includes a processing unit 1714, a system memory 1716, and a system bus 1718. The system bus 1718 couples system components including, but not limited to, the system memory 1716 to the processing unit 1714. The processing unit 1714 can be any of various available processors. Dual microprocessors and other multiprocessor architectures also can be employed as the processing unit 1714.

The system bus 1718 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1716 includes volatile memory 1720 and nonvolatile memory 1722. The basic input/output system (BIOS), containing the basic routines to transfer information between elements within the computer 1712, such as during start-up, is stored in nonvolatile memory 1722. By way of illustration, and not limitation, nonvolatile memory 1722 can include read only memory (ROM), programmable ROM (PROM), electrically programmable ROM (EPROM), electrically erasable PROM (EEPROM), or flash memory. Volatile memory 1720 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1712 also includes removable/non-removable, volatile/nonvolatile computer storage media. FIG. 17 illustrates, for example a disk storage 1724. Disk storage 1724 includes, but is not limited to, devices like a magnetic disk drive, floppy disk drive, tape drive, Jaz drive, Zip drive, LS-100 drive, flash memory card, or memory stick. In addition, disk storage 1724 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1724 to the system bus 1718, a removable or non-removable interface is typically used such as interface 1726.

It is to be appreciated that FIG. 17 describes software that acts as an intermediary between users and the basic computer resources described in suitable operating environment 1710. Such software includes an operating system 1728. Operating system 1728, which can be stored on disk storage 1724, acts to control and allocate resources of the computer system 1712. System applications 1730 take advantage of the management of resources by operating system 1728 through program modules 1732 and program data 1734 stored either in system memory 1716 or on disk storage 1724. It is to be appreciated that one or more embodiments of the subject disclosure can be implemented with various operating systems or combinations of operating systems.

A user enters commands or information into the computer 1712 through input device(s) 1736. Input devices 1736 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1714 through the system bus 1718 *via* interface port(s) 1738. Interface port(s) 1738 include, for example, a serial port, a parallel port, a game port, and a universal serial bus (USB). Output device(s) 1740 use some of the same type of ports as input device(s) 1736. Thus, for example, a USB port may be used to provide input to computer 1712, and to output information from computer 1712 to an output device 1740. Output adapter 1742 is provided to illustrate that there are some output devices 1740 like monitors, speakers, and printers, among other output devices 1740, which require special adapters. The output adapters 1742 include, by way of illustration and not limitation, video and sound cards that provide a means of connection between the output device 1740 and the system bus 1718. It should be noted that other devices and/or systems of devices provide both input and output capabilities such as remote computer(s) 1744.

Computer 1712 can operate in a networked environment using logical connections to one or more remote computers, such as remote computer(s) 1744. The remote computer(s) 1744 can be a personal computer, a server, a router, a network PC, a workstation, a microprocessor based appliance, a peer device or other common network node and the like, and typically includes many or all of the elements described relative to computer 1712. For purposes of brevity, only a memory storage device 1746 is illustrated with remote computer(s) 1744. Remote computer(s) 1744 is logically connected to computer 1712 through a network interface 1748 and then physically connected *via* communication connection 1750. Network interface 1748 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1750 refers to the hardware/software employed to connect the network interface 1748 to the bus 1718. While communication connection 1750 is shown for illustrative clarity inside computer 1712, it can also be external to computer 1712. The hardware/software necessary for connection to the network interface 1748 includes, for exemplary purposes only, internal and external technologies such as, modems including regular telephone grade modems, cable modems and DSL modems, ISDN adapters, and Ethernet cards.

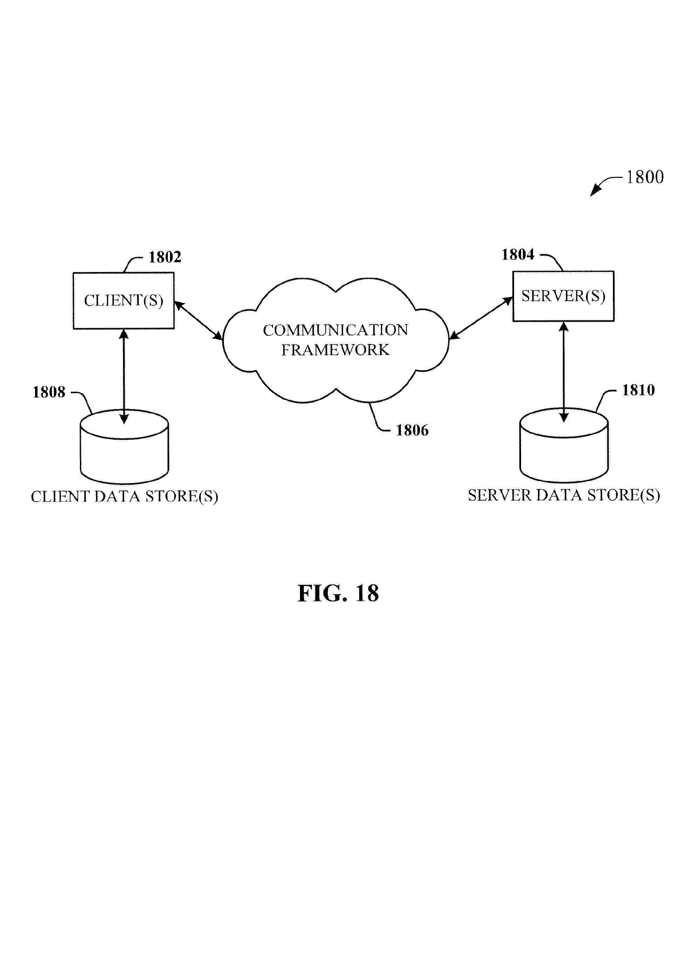

FIG. 18 is a schematic block diagram of a sample-computing environment 1800 with which the disclosed subject matter can interact. The system 1800 includes one or more client(s) 1810. The client(s) 1810 can be hardware and/or software (*e.g*., threads, processes, computing devices). The system 1800 also includes one or more server(s) 1830. The server(s) 1830 can also be hardware and/or software (*e.g*., threads, processes, computing devices). The servers 1830 can house threads to perform transformations by employing one or more embodiments as described herien, for example. One possible communication between a client 1810 and a server 1830 can be in the form of a data packet adapted to be transmitted between two or more computer processes. The system 1800 includes a communication framework 1850 that can be employed to facilitate communications between the client(s) 1810 and the server(s) 1830. The client(s) 1810 are operably connected to one or more client data store(s) 1860 that can be employed to store information local to the client(s) 1810. Similarly, the server(s) 1830 are operably connected to one or more server data store(s) 1840 that can be employed to store information local to the servers 1830.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g*., hard disk, floppy disk, magnetic strips...), optical disks [*e.g*., compact disk (CD), digital versatile disk (DVD)...], smart cards, and flash memory devices (*e.g*., card, stick, key drive...).
The following is a list of further preferred embodiments of the invention:
Embodiment 1: A system for sharing operator interface graphic element definitions, comprising:
   a storage component configured to maintain one or more graphic element definitions in a hierarchical storage structure; and
   an interface component configured to process a request to locate and retrieve a selected subset of the one or more graphic element definitions.
Embodiment 2: The system of embodiment 1, wherein the hierarchical storage structure comprises a plurality of nodes representing categories and respective sub-categories into which the one or more graphic element definitions are classified.
Embodiment 3: The system of embodiment 1, further comprising a query component configured to identify the selected subset of the one or more graphic element definitions according to at least one search criterion received in the request that defines the selected subset of the one or more graphic element definitions.
Embodiment 4: The system of embodiment 2, further comprising a browsing component configured to identify the selected subset according to a browse input received in the request that selects at least one of the categories or the respective sub-categories.
Embodiment 5: The system of embodiment 1, further comprising a retrieval component configured to retrieve the selected subset of the one or more graphic element definitions and to pass the selected subset of the one or more graphic element definitions to the interface component for transmission to a source of the request.
Embodiment 6: The system of embodiment 1, further comprising a publish component configured to receive a new graphic element definition submitted to the interface component and to store the new graphic element definition within the hierarchical storage structure.
Embodiment 7: The system of embodiment 6, wherein the publish component is further configured to extract metadata associated with the new graphical element definition and to classify the new graphic element within the hierarchical storage structure in accordance with the tag data.
Embodiment 8: The system of embodiment 7, wherein the metadata comprises at least one of industry information, category information, or sub-category information.
Embodiment 9: The system of embodiment 6, wherein the publish component is further configured to create a new node within the hierarchical storage structure if the metadata includes a new category or a new sub-category not existent within the hierarchical storage structure.
Embodiment 10: The system of embodiment 1, further comprising a notification component configured to transmit a notification to at least one client that a new version of a selected graphical element definition has been detected within the hierarchical storage structure.
Embodiment 11: The system of embodiment 3, further comprising:
   an acquisition component configured to read at least one control data structure from a control program; and
   an association component configured to generate the at least one search criterion based on the at least one control data structure and a predetermined graphics mapping defining at least one relationship between the at least one control data structure and at least one display object type.
Embodiment 12: The system of embodiment 11, wherein the predetermined mapping is associated with a human-machine interface application.
Embodiment 13: A method for managing reusable operator interface graphic element definitions, comprising:
   storing one or more graphic element definitions in a searchable catalog in a hierarchical storage format; and
   retrieving a selected subset of the one or more graphic element definitions in response to a received request.
Embodiment 14: The method of embodiment 13, further comprising:
   configuring the hierarchical storage format to comprise a plurality of categories and sub-categories; and
   associating the one or more graphic element definitions with respective browsable pathways through a subset of the plurality of categories and sub-categories.
Embodiment 15: The method of embodiment 13, further comprising identifying the selected subset of the one or more graphic element definitions based on at least one search criterion included in the received request.
Embodiment 16: The method of embodiment 14, further comprising identifying the selected subset of the one or more graphic element definitions based on at least one browse input included in the received request that selects at least a first category or a first sub-category from the plurality of categories and sub-categories.
Embodiment 17: The method of embodiment 13, further comprising sending the selected subset of the one or more graphic element definitions to a source of the request.
Embodiment 18: The method of embodiment 13, further comprising:
   receiving a new graphic element definition;
   extracting metadata from a metadata tag associated with the new graphic element definition; and
   classifying the new graphic element definition at a location within the searchable category determined according to the metadata.
Embodiment 19: The method of embodiment 16, further comprising:
   reading at least one control data structure from a control program;
   generating the at least one search criterion based on the at least one control data structure and a graphical mapping defining an association between the at least one control data structure and at least one display object type.
Embodiment 20: A computer-readable medium having stored thereon computer-executable instructions that, in response to execution by a computer, direct the computer to:
   create a browsable hierarchical classification structure configured to store one or more graphic element definitions; and
   create an interface configured to locate and retrieve a selected subset of the one or more graphic element in response to a received request.

## Claims

1. A system for sharing operator interface graphic element definitions, comprising:
a storage component configured to maintain one or more graphic element definitions in a hierarchical storage structure; and
an interface component configured to process a request to locate and retrieve a selected subset of the one or more graphic element definitions.

2. The system of claim 1, wherein the hierarchical storage structure comprises a plurality of nodes representing categories and respective sub-categories into which the one or more graphic element definitions are classified.

3. The system of claim 1 or 2, further comprising a query component configured to identify the selected subset of the one or more graphic element definitions according to at least one search criterion received in the request that defines the selected subset of the one or more graphic element definitions.

4. The system of claim 2, further comprising a browsing component configured to identify the selected subset according to a browse input received in the request that selects at least one of the categories or the respective sub-categories.

5. The system of any one of claims 1 to 4, further comprising a retrieval component configured to retrieve the selected subset of the one or more graphic element definitions and to pass the selected subset of the one or more graphic element definitions to the interface component for transmission to a source of the request, or
further comprising a publish component configured to receive a new graphic element definition submitted to the interface component and to store the new graphic element definition within the hierarchical storage structure.

6. The system of claim 5, wherein the publish component is further configured to extract metadata associated with the new graphical element definition and to classify the new graphic element within the hierarchical storage structure in accordance with the tag data,
and/or
wherein the metadata comprises at least one of industry information, category information, or sub-category information.

7. The system of claim 5, wherein the publish component is further configured to create a new node within the hierarchical storage structure if the metadata includes a new category or a new sub-category not existent within the hierarchical storage structure.

8. The system of any one of claims 1 to 7, further comprising a notification component configured to transmit a notification to at least one client that a new version of a selected graphical element definition has been detected within the hierarchical storage structure.

9. The system of claim 3, further comprising:
an acquisition component configured to read at least one control data structure from a control program; and
an association component configured to generate the at least one search criterion based on the at least one control data structure and a predetermined graphics mapping defining at least one relationship between the at least one control data structure and at least one display object type.

10. The system of claim 9, wherein the predetermined mapping is associated with a human-machine interface application.

11. A method for managing reusable operator interface graphic element definitions, comprising:
storing one or more graphic element definitions in a searchable catalog in a hierarchical storage format; and
retrieving a selected subset of the one or more graphic element definitions in response to a received request.

12. The method of claim 11, further comprising:
configuring the hierarchical storage format to comprise a plurality of categories and sub-categories; and
associating the one or more graphic element definitions with respective browsable pathways through a subset of the plurality of categories and sub-categories, or
further comprising identifying the selected subset of the one or more graphic element definitions based on at least one search criterion included in the received request, and/or further comprising identifying the selected subset of the one or more graphic element definitions based on at least one browse input included in the received request that selects at least a first category or a first sub-category from the plurality of categories and sub-categories.

13. The method of claim 11 or 12, further comprising sending the selected subset of the one or more graphic element definitions to a source of the request, or
further comprising:
receiving a new graphic element definition;
extracting metadata from a metadata tag associated with the new graphic element definition; and
classifying the new graphic element definition at a location within the searchable category determined according to the metadata.

14. The method of any one of claims 11 to 13, further comprising:
reading at least one control data structure from a control program;
generating the at least one search criterion based on the at least one control data structure and a graphical mapping defining an association between the at least one control data structure and at least one display object type.

15. A computer-readable medium having stored thereon computer-executable instructions that, in response to execution by a computer, direct the computer to:
create a browsable hierarchical classification structure configured to store one or more graphic element definitions; and
create an interface configured to locate and retrieve a selected subset of the one or more graphic element in response to a received request.
